## Europäisches Patentamt
## European Patent Office
## Office européen des brevets

(19)

(11) Veröffentlichungsnummer: **0 333 273**

**A2**

(12) # EUROPÄISCHE PATENTANMELDUNG

(21) Anmeldenummer: **89200617.2**

(51) Int. Cl.⁴: **H04N 5/04**

(22) Anmeldetag: **13.03.89**

(30) Priorität: **18.03.88 DE 3809075**

(43) Veröffentlichungstag der Anmeldung:
**20.09.89 Patentblatt 89/38**

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB**

(72) Erfinder: **Riegel, Maximilian, Dipl.-Ing.**
**Herrnackerstrasse 65**
**D-8500 Ngb.(DE)**

(74) Vertreter: **Peuckert, Hermann, Dipl.-Ing. et al**
**Philips Patentverwaltung GmbH**
**Wendenstrasse 35 Postfach 10 51 49**
**D-2000 Hamburg 1(DE)**

(54) **Steuersignalgenerator für die Verarbeitung eines Videosignales.**

(57) Der beschriebene Steuersignalgenerator für die Verarbeitung eines Videosignales zeichnet sich durch einen adressierbaren Speicher (PR1) aus, dessen Adressen gleichlangen Zeitabschnitten eines Videobildes zugeordnet sind. Unter einer Adresse des Speichers (PR1) ist die binär codierte Amplitude abgespeichert, die das vom Steuersignalgenerator erzeugte Steuersignal (SS) im zugeordneten Zeitabschnitt annehmen soll. Ein von einem Zähltakt (T) getaktetes Zählwerk (Z) erzeugt nacheinander die Adressen, die aufeinanderfolgenden Zeitabschnitten eines Videobildes entsprechen und die den Adresseingängen des adressierbaren Speichers (PR1) zugeführt werden. Die Frequenz des Zähltaktes (T) ist so gewählt, daß während der zeitlichen Länge eines Videobildes alle Adressen, die zu einem Videobild gehören, durchlaufen werden. Über eine Rückkopplung (S1) vom Ausgang des adressierbaren Speichers (PR1) zum Zählwerk (Z) wird das Zählwerk (Z) von der Adresse des letzten Zeitabschnittes eines Videobildes auf die Adresse des ersten Zeitabschnittes des nächstfolgenden Videobildes gesetzt.

FIG.1

## Steuersignalgenerator für die Verarbeitung eines Videosignales

Die Erfindung betrifft einen Steuersignalgenerator für die Verarbeitung eines Videosignales. Ein derartiger Steuersignalgenerator ist z.B. bei der Codierung von Videobildern einsetzbar. In diesem Fall ist er Bestandteil eines Codierers, wie er z.B. in der DE 36 13 393 beschrieben ist.

Aus der EP 00 34 956 ist ein Basissignal- und Fernsehtestsignal-Generator bekannt, bei dem die Amplituden der Basis- und Testsignale in einem adressierbaren Speicher gespeichert sind. Der Speicher wird von einem ersten Zähler direkt adressiert und von einem zweiten Zähler indirekt über einen weiteren Speicher, in dem Adressen für den ersten Speicher gespeichert sind. Die beiden Zähler werden mit Taktsignalen unterschiedlicher Frequenzen getaktet und entsprechen im wesentlichen einem Zeilen- und einem Bildpunktzähler. Die bekannte Anordnung kann durch ein Synchronsignal mit anderen, gleich aufgebauten Anordnungen, synchronisiert werden.

Der Erfindung liegt die Aufgabe zugrunde, einen Steuersignalgenerator anzugeben, dessen Lauf mit Videobild-Synchron-Impulsen zu einem Videosignal synchronisierbar ist; dabei soll die Phasenlage der Videobild-Synchron-Impulse relativ zum zugehörigen Videosignal beliebig sein.

Diese Aufgabe wird mit folgenden Mitteln gelöst:

1.1. einen adressierbaren Speicher, dessen Adressen gleichlangen Zeitabschnitten eines Videobildes zugeordnet sind, wobei unter einer Adresse des Speichers die binärcodierte Amplitude abgespeichert ist, die ein erzeugtes Steuersignal im zugeordneten Zeitabschnitt annehmen soll,

1.2. ein von einem Zähltakt getaktetes Zählwerk, das nacheinander die Adressen erzeugt, die aufeinander folgenden Zeitabschnitten eines Videobildes entsprechen und die den Adreßeingängen des adressierbaren Speichers zugeführt werden, wobei die Frequenz des Zähltaktes so gewählt ist, daß während der zeitlichen Länge eines Videobildes alle Adressen eines Videobildes durchlaufen werden,

1.3. eine Rückkopplung vom Ausgang des adressierbaren Speichers zum Zählwerk, über die das Zählwerk bei der Adresse des letzten Zeitabschnittes eines Videobildes auf die Adresse des ersten Zeitabschnittes des nächstfolgenden Videobildes gesetzt wird.

Vorteilhafte Ausgestaltungen der Erfindung sind den Unteransprüchen zu entnehmen.

Anhand eines Ausführungsbeispieles und der Figuren soll die Erfindung näher erläutert werden.

Es zeigen:

Figur 1 das Prinzipschaltbild eines erfindungsgemäßen Steuersignalgenerators und

Figur 2 eine Kontrollschaltung.

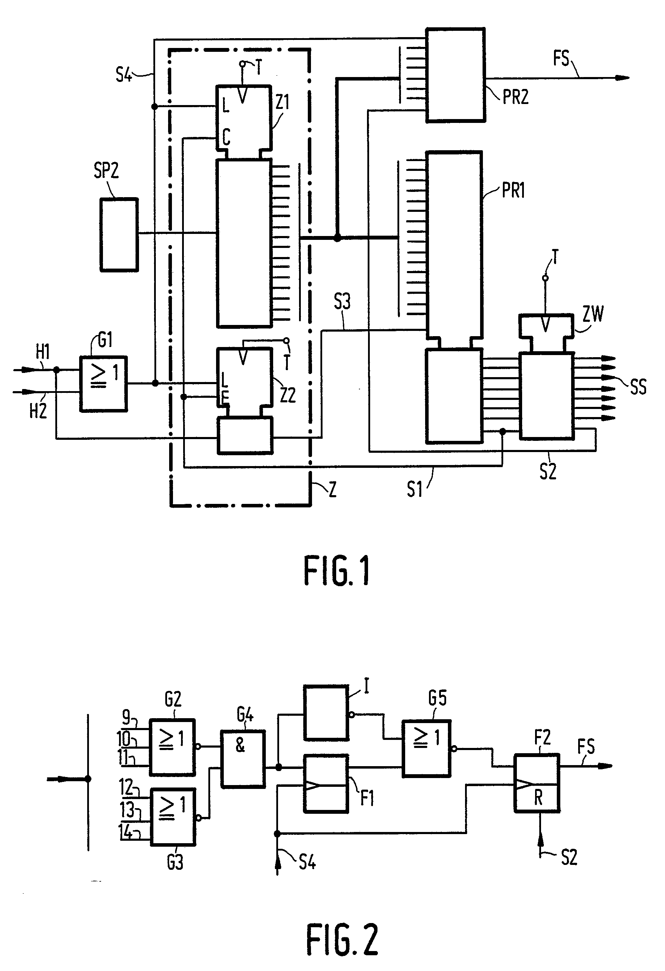

Der Steuersignalgenerator der Figur 1 wird zu einem Videosignal synchronisiert, bei dem die Information eines Video-Vollbildes in zwei aufeinanderfolgenden Video-Halbbildern enthalten ist. Das Wort Videobild wird im vorliegenden Zusammenhang für Video-Vollbilder oder Video-Halb bilder verwendet, sofern diese Unterscheidung bedeutungslos ist.

Der abgebildete Steuersignalgenerator erzeugt ein Steuersignal SS, das für die Codierung eines gerade anliegenden Videobildes benötigt wird. Wie das Steuersignal SS im einzelnen aussieht, hängt vom Speicherinhalt eines programmierbaren Speichers PR1 ab, dessen Adreßeingänge mit den Ausgängen eines Zählwerkes Z verbunden sind, das aus zwei Zählern Z1, Z2 besteht. Jeder Stand der Zähler Z1,Z2 entspricht einer Adresse für den programmierten Speicher PR1.

Die detaillierte Darstellung des Steuersignals SS würde ein Eingehen auf die spezielle Codierung von Videobildern erfordern. Da die Codierung nicht Gegenstand der hier behandelten Problematik ist, soll auch auf das Steuersignal SS nicht näher eingegangen werden.

Je nach Stand der Zähler Z1, Z2 erscheint an den Ausgängen des Speichers PR1 eine für diesen Stand charakteristische Bitkombination, nämlich eine binär codierte Amplitude des Steuersignales SS, die von einem Abtast-Halte-Glied ZW übernommen wird und einen Takt lang an seinen Ausgängen zur Verfügung steht. Die Taktversorgung des Abtast-Haltegliedes ZW und der Zähler Z1, Z2 erfolgt mit einem Zähltakt T.

Jeder Stand des Zählers Z1 entspricht einem Zeitabschnitt zwischen Anfang und Ende eines Halbbildes. Dem ersten Zeitabschnitt eines Halbbildes entspricht der Zählerstand 0, dem letzten Abschnitt der Stand 50080, da der Zähler Z1 mit 2,5 MHz getaktet wird und der Steuersignalgenerator zur Codierung eines Videosignales entsprechend der CCIR-Norm gedacht ist.

Wegen der Rückkopplung eines Ausganges des Speichers PR1 über eine Leitung S1 auf den Löscheingang C des Zählers Z1 wird der Zähler Z1 vom Stand 50080 auf den Stand 0 zurückgesetzt, denn der Speicher PR1 ist so programmiert, daß beim Stand 50080 auf der Leitung S1 ein Löschimpuls erscheint.

Der Signalzustand am Ausgang des Ein-Bit-Zählers Z2, also der Signalzustand auf einer Leitung S3, gibt die Nummer eines Halbbildes an. Ist der Zustand HIGH, entspricht das dem ersten Halbbild, ist er LOW, entspricht das dem zweiten Halbbild. Der Impuls, der den Zähler Z1 löscht, sorgt auch für einen Signalzustandswechsel auf der Leitung S3, denn am Eingang E gibt dieser Impuls den Zähler Z2 für einen Takt des Zähltaktes T frei. Die Leitung S3 ist ebenfalls an einen Adreßeingang des Speichers SP1 geführt. Durch die Zählung der Halbbilder können die an den Ausgängen des Speichers SP1 bzw. an denen des Haltegliedes ZW abgegebenen Bitkombinationen von Halbbild zu Halbbild verschieden sein.

Leitungen H1, H2 sind für die Leitung von Halbbild-Synchron-Impulsen gedacht. Die Leitung H1 ist für Synchron-Impulse des ersten Halbbildes und die Leitung H2 für Synchron-Impulse des zweiten Halbbildes vorgesehen. Treten auf diesen Leitungen keine Impulse auf, so läuft der Steuersignalgenerator unbeeinflußt und erzeugt zyklisch das Steuersignal SS, das sich mit der Periodendauer eines Video-Vollbildes wiederholt. Die Halbbild-Synchron-Impulse können zu einem beliebigen Zeitpunkt innerhalb eines Halbbildes auftreten, vorausgesetzt dieser Zeitpunkt bleibt nominell für jedes Halbbild der gleiche. Ein ODER-Gatter G1 sorgt dafür, daß auf einer Leitung S4 pro Halbbild ein Impuls erscheint. Diese Halbbild-Synchron-Impulse werden an die Ladeeingänge L der Zähler Z1 und Z2 geführt. Beim Aufteten eines Halbbild-Synchron-Impulses wird der Zähler Z1 mit der in einem Speicher SP2 gespeicherten Adresse geladen. Diese Adresse gibt die Anzahl der Zeitabschnitte an, die zwischen Beginn eines Halbbildes und dem Aufteten eines Halbbild-Synchron-Impulses liegt. Durch Änderung der im Speicher SP2 gespeicherten Adresse und durch Änderung des im programmierbaren Speicher PR1 abgelegten Programmes kann die Phasenlage des Steuersignals SS relativ zum verarbeitenden Videosignal beliebig gewählt werden, und zwar unabhängig von der Lage der Halbbild-Synchron-Impulse. Ist die Synchronisation des Steuersignalgenerators mit den Video-Halbbild-Synchron-Impulsen perfekt, so wird der Zähler Z1 zu dem Zeitpunkt mit der im Speicher SP2 gespeicherten Adresse geladen, zu dem er von selbst bei ihr angekommen ist; der Lauf des Zählers Z1 bleibt also unkorrigiert.

Auf den Leitungen H1 und H2 treten die Video-Halbbild-Synchron-Impulse nie gleichzeitig auf, da sie eben zu verschiedenen Halbbildern gehören. Daher wird der Zähler Z2 mit einer binären Eins geladen, wenn ein Synchron-Impuls des ersten Halbbildes auf der Leitung H1 auftritt und mit einer binären Null, wenn ein Synchron-Impuls des zweiten Halbbildes auf der Leitung H2 auftritt.

Einige Ausgänge der Stufen des Zählers Z1, der Ausgang des Gatters G1 sowie ein Ausgang des Abtast-Haltegliedes ZW sind auch mit Eingängen einer Kontrolleinheit PR2 verbunden. Über die Verbindung des Abtast-Haltegliedes ZW mit der Kontrolleinheit PR2 - also über eine Leitung S2 -läuft der auf den Zähltakt T synchronisierte Impuls, der nur während des letzten Zeitabschnittes eines Video-Halbbildes im Signal SS auftritt.

Wie Figur 2 zeigt, enthält die Kontrolleinheit PR1 eine aus mehreren Gattern G2, G3, G4 bestehende Logik, mit der festgestellt wird, ob der Zähler Z1 sich innerhalb eines vorbestimmten Adresseninintervalls befindet oder nicht. Wie in Figur 2 angedeutet, sind die Ausgänge der Stufen 9 bis 14 des Zählers Z1 mit den Eingängen der Logik G2, G3, G4 verbunden. Liegen an diesen Eingängen binäre Nullen an, so liegt am Ausgang der Logik G2, G3, G4 eine binäre Eins an, anderenfalls eine binäre Null. Liegt eine Eins an, befindet sich der Zähler im Intervall von 0 bis 1 024.

Tritt ein Halbbild-Synchron-Impuls auf der Leitung S4 nicht innerhalb dieses vorbestimmten Adresseninintervalls auf, so wird diese fehlende Koinzidenz durch Speicherung der am Ausgang des Gatters G4 anliegenden binären Null in einem Flip-Flop F1 festgehalten. Tritt der nächste Halbbild-Synchron-Impuls wieder innerhalb seiner Toleranzgrenzen - also innerhalb des vorbestimmten Adresseninintervalls - auf, so wird die Null im Flip-Flop F1 durch ein Gatter G5 invertiert und in ein Flip-Flop F2 als Eins übernommen. Das Gatter G5 wird für den vorliegenden Fall durch das invertierte Ausgangssignal der Logik G2, G3, G4 geöffnet; die Inversion übernimmt ein Inverter I. Die Eins im Flip-Flop F2, die auf einer Ausgangsleitung FS weitergeleitet wird, ist das Alarmsignal, das den vorangegangenen groben Versatz zwischen den Videobild-Synchron-Impulsen auf den Leitungen H1 und H2 und dem Steuersignalgenerator anzeigt. Das Flip-Flop F2 wird durch einen Impuls auf der Leitung S2, die an seinen Rücksetzeingang R geführt ist, wieder zurückgesetzt.

Aufgrund des Alarmsignales werden dann hier nicht weiter erläuterte Folgemaßnahmen ergriffen.

## Ansprüche

1. Steuersignalgenerator für die Verarbeitung eines Videosignales,
gekennzeichnet durch

1.1. einen adressierbaren Speicher (PR1), dessen Adressen gleichlangen Zeitabschnitten eines Videobildes zugeordnet sind, wobei unter einer Adresse des Speichers (PR1) die binärcodierte Amplitude abgespeichert ist, die ein erzeugtes Steuersignal (SS) im zugeordneten Zeitabschnitt annehmen soll,

1.2. ein von einem Zähltakt (T) getaktetes Zählwerk (Z), das nacheinander die Adressen erzeugt, die aufeinander folgenden Zeitabschnitten eines Videobildes entsprechen und die den Adreßeingängen des adressierbaren Speichers (PR1) zugeführt werden, wobei die Frequenz des Zähltaktes (T) so gewählt ist, daß während der zeitlichen Länge eines Videobildes alle Adressen eines Videobildes durchlaufen werden,

1.3. eine Rückkopplung (S1) vom Ausgang des adressierbaren Speichers (PR1) zum Zählwerk (Z), über die das Zählwerk (Z) bei der Adresse des letzten Zeitabschnittes eines Videobildes auf die Adresse des ersten Zeitabschnittes des nächstfolgenden Videobildes gesetzt wird.

2. Steuerimpulsgenerator nach Anspruch 1,
dadurch gekennzeichnet,
daß Mittel (SP2, G1) vorgesehen sind, mit denen das Zählwerk (Z) mit Hilfe von Videobild-Synchron-Impulsen (H1, H2) auf eine vorbestimmte Adresse gesetzt wird.

3. Steuerimpulsgenerator nach Anspruch 2,
dadurch gekennzeichnet,
daß eine Kontrolleinheit (PR2) vorgesehen ist, der die vom Zählwerk (Z) erzeugten Adressen, die Videobild-Synchron-Impulse sowie ein mit dem letzten Zeitabschnitt eines Videobildes erzeugter Impuls im Steuersignal (SS) zugeführt werden, und daß die Kontrolleinheit (PR1) dann ein Alarmsignal (FS) abgibt, wenn ein Videobild-Synchron-Impuls nicht innerhalb eines vorbestimmten Adressenintervalls auftritt und der nachfolgende Videobild-Synchron-Impuls innerhalb dieses Adressenintervalls auftritt.

4. Steuersignalgenerator nach Anspruch 1 oder 2,
dadurch gekennzeichnet,
daß in dem Fall, in dem sich das Videosignal in Vollbilder gliedert und jedes Vollbild aus zwei Halbbildern besteht, das Zählwerk (Z) einen ersten Zähler (Z1) enthält, der die Adressen für die Zeitabschnitte innerhalb eines Halbbildes erzeugt, und einen zweiten einstufigen Zähler (Z2) zum Zählen der Halbbilder eines Vollbildes enthält, daß über die Rückkopplung (S1) der erste Zähler (Z1) gelöscht wird und der zweite Zähler (Z2) für eine Taktflanke des Zähltaktes (T) freigegeben wird.

5. Steuersignalgenerator nach Anspruch 4,
dadurch gekennzeichnet,
daß zur Synchronisation des Laufs der beiden Zähler (Z1, Z2) mit einem zu verarbeitendem Videosignal der erste Zähler (Z1) beim Eintreffen eines jeden Halbbild-Synchron-Impulses auf eine in einem Speicher (SP) gespeicherte Adresse gesetzt wird, während der zweite Zähler (Z2) durch jeden Halbbild-Synchron-Impuls mit der Nummer des gerade zu verarbeitenden Halbbildes geladen wird.

FIG.1

FIG.2